# EUROPEAN PATENT APPLICATION

(11) **EP 4 564 332 A1**
(43) Date of publication of application: **04.06.2025**
(21) Application number: 24215999.4
(22) Date of filing: 28.11.2024
(51) Int. Cl.: G09B 9/16, G09B 9/30, G09B 9/28

(54) **VIRTUALIZED AVIONICS**

(30) Priority: 28.11.2023 US 202363603538 P
(71) Applicant: Loft Dynamics AG, 8200 Schaffhausen (CH)
(72) Inventor: Hegner, Robert, 8200 Schaffhausen (CH); Diethelm, Hannes, 8200 Schaffhausen (CH); Danuser, Gian, 8200 Schaffhausen (CH)
(74) Representative: Bittner, Bernhard

(57) **Abstract**

A flight simulation system and method include a physical simulation environment providing flight simulation to a trainee. At least one mock avionics device is positioned within the physical simulation environment. A virtual environment is viewable by the trainee on at least one visual interface, wherein the at least one visual interface displays to the trainee a virtualized cockpit having a virtualized avionics device display.

## Description

### Cross Reference to Related Application

This application claims benefit to US Provisional Patent Application Serial No. 63/603,538, filed November 28, 2023, entitled "Virtualized Avionics", the entire contents of which is incorporated herein by reference.

### Field of the Disclosure

The present disclosure relates to avionics simulation systems. The disclosure has particular utility in virtualized avionics used with aircraft simulation systems, and will be described in connection with such utility, although other utilities are contemplated.

### Background and Summary

This section provides background information related to the present disclosure which is not necessarily prior art. This section provides a general summary of the disclosure and is not a comprehensive disclosure of its full scope or all its features.

Flight simulation is used to artificially generate avionics operations including ground operations, aircraft flight, and an environment in which the aircraft operates, for pilot training, design, or other purposes. Flight simulators typically virtually recreate situations of avionics operations, including how aircraft react to applications of flight controls, the effects of other aircraft systems, and how the aircraft reacts to external factors such as air density, turbulence, wind shear, cloud, precipitation, etc. Flight simulation is used for a variety of reasons, including flight training pilots, the design and development of the aircraft itself, and research into aircraft characteristics and control handling qualities. Some simulations are based on previously recorded flights which are virtually recreated for a pilot.

Flight simulator systems include platforms with avionics devices. The conventional approach for integrating avionics devices, e.g., iPad running an aviation app such as Foreflight, Garmin^{®} GTN 650 GPS/NAV/COM, Garmin^{®} G500 PFD, with a simulator is to mount the original avionics device, or a replica thereof, in the simulator cockpit.

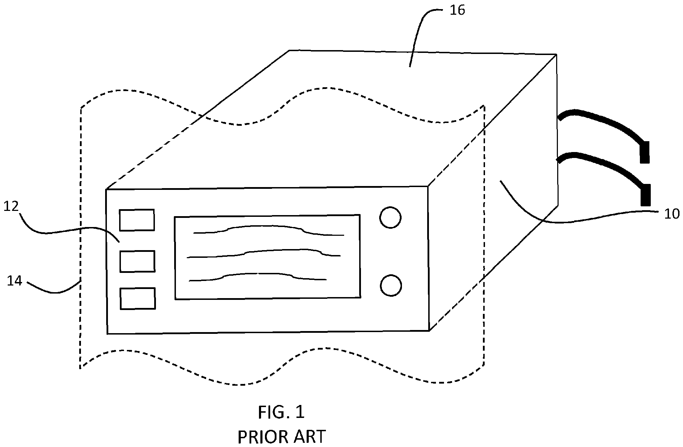

However, these devices are typically expensive, and they require specific spatial parameters. For instance, many avionics devices require mounting in a display panel. FIG. 1 is a diagrammatic illustration of an avionics device incorporated in a flight simulator display panel, in accordance with the prior art. As shown in FIG. 1, the avionics device 10 is mounted with the front face 12 of the avionics device 10 flush or substantially flush with the display panel 14, such that the pilot can access and actuate the control features on the avionics device 10. The rear portion 16 of the avionics device 10 is positioned behind the display panel 14, and it typically requires a large volume of space behind the panel 14. With the available space in a simulator being limited, it can often be difficult to accommodate avionics devices 10 in the simulator.

Furthermore, utilizing real avionics devices can prove challenging when integrating them into the simulation systems. For example, a Garmin^{®} GTN 650 GPS/NAV/COM has various connectors and physical interfaces, and in order to inject the simulation state, i.e., aircraft locations, speeds, etc. into the real devices, the devices need to be completely physically mocked and connected to the simulation system.

To improve over these limitations of conventional simulation system, the present disclosure is directed to a fully virtualized cockpit where the pilot user can physically interact with mock avionics devices and visually see a display that can be integrated by feeding the display and data streams of the mock avionics devices into the pilot's display. In the present invention, the display will be a virtual reality (VR) display, mixed reality (MR) display, augmented reality (AR) display, spatial computing devices, tablets, monitors, haptic feedback devices or even remote collaboration tools, such as a head-worn display device. The visual interface for the pilot will also receive user input feeds from the mock cockpit back to the visual interface, such that the system is dynamic to physical interactions between the pilot and the mock avionics devices.

In one embodiment, a flight simulation system and method include a physical simulation environment providing flight simulation to a trainee. At least one mock avionics device is positioned within the physical simulation environment. A virtual environment is viewable by the trainee on at least one visual interface, wherein at least one visual interface displays to the trainee a virtualized cockpit having a virtualized avionics device display.

In one aspect, the at least one visual interface further comprises at least one of: an augmented reality (AR) device, mixed reality (MR) device, a virtual reality (VR) device, spatial computing devices, a tablet, a monitor, a haptic feedback device or a remote collaboration tool.

In another aspect, the at least one mock avionics device is a physical device viewable within the virtualized cockpit.

In yet another aspect, the at least one mock avionics device comprises at least one input selector, and the input selector comprises at least one of: knobs, buttons, or input touch surfaces.

In another embodiment, a flight simulation system for displaying physical elements in a virtual flight simulation system comprising: a virtual cockpit viewed through a virtual environment with at least one camera to capture images or video of one or more physical elements. A processing unit configured to process the images captured within the physical environment and render digital images or video of the physical elements within the virtual environment and at least one display device configured to display the rendered physical elements within the virtual environment.

In one aspect, the system further comprises a position tracking module configured to position the camera within the physical environment and render displayable images from the physical environment within the visual interface.

In yet another aspect, the system may also provide an adjustment module is configured to adjust the rendering of the physical elements within the virtual environment based on a tracked position of the camera.

In another aspect, the camera and at least one sensing device can track a hand of the trainee during simulation.

In yet another aspect, the at least one sensing device senses the position of the physical elements and provides a video stream to the display device.

In another aspect, the virtual environment is interactive and configured to display trainee interaction with the physical elements.

In yet another aspect, the display device further comprises at least one of an augmented reality (AR) device, mixed reality (MR) device, a virtual reality (VR) device, spatial computing devices, a tablet, a monitor, a haptic feedback device or a remote collaboration tool.

In another aspect, a locating device provides physical position details of the trainee displayed virtually.

In yet another aspect, software running on the processing unit is configured to provide a video stream of the captured images, and the software is configured to capture images and content and display frame by frame to the trainee in the virtual environment.

In another embodiment, a method for providing a virtual flight simulation system environment, the method comprising: providing a physical simulation environment to a trainee, wherein at least one physical mock avionics device is within the physical simulation environment. A virtual environment is viewable by the trainee on a visual interface device, which displays to the trainee the virtual environment having at least one virtualized avionics device and configures the visual interface device to display rendered physical elements within the virtual environment to the trainee. The rendered physical elements correspond to the at least one mock avionics device within the physical simulation environment.

In one aspect, the at least one visual interface can be an augmented reality (AR) device, mixed reality (MR) device, a virtual reality (VR) device, spatial computing devices, a tablet, a monitor, a haptic feedback device or a remote collaboration tool.

In another aspect, the at least one mock avionics device comprises at least one input selector.

In yet another aspect, the input selector comprises at least one of: knobs, buttons or input touch surfaces.

In another aspect, the display provides a video stream to the visual interface to the trainee.

Further areas of applicability will become apparent from the description provided herein. The description and specific examples in this summary are intended for purposes of illustration only and are not intended to limit the scope of the present disclosure.

### Brief Description of the Drawings

Further features and advantages of the disclosure will be seen in the following detailed description, taken in conjunction with the accompanying drawings. The drawings described herein are for illustrative purposes only of selected embodiments and not all possible implementations and are not intended to limit the scope of the present disclosure.

In the drawings:
FIG. 1 is a diagrammatic illustration of a flight simulator display panel with an avionics device, in accordance with the prior art;
FIG. 2 is a diagrammatic illustration of a flight simulation system, in accordance with the present disclosure;
FIG. 3 is a diagrammatic illustration of the flight simulation system of FIG. 2, in accordance with the present disclosure;
FIG. 4 is a diagrammatic illustration of the flight simulation system of FIG. 2 using software emulation, in accordance with the present disclosure;
FIG. 5 is a diagrammatic illustration of the flight simulation system of FIG. 2 using hardware and/or software interception, in accordance with the present disclosure; and
FIG. 6 is a flowchart illustrating a method for providing the flight simulation system of FIG. 2 with a virtualized environment with physical virtualized avionics equipment.

### Detailed Description

Example embodiments will now be described more fully with reference to the accompanying drawings. Example embodiments are provided so that this disclosure will be thorough and will fully convey the scope to those who are skilled in the art. Numerous specific details are set forth such as examples of specific components, devices, and methods to provide a thorough understanding of embodiments of the present disclosure. It will be apparent to those skilled in the art that specific details need not be employed, that example embodiments may be embodied in many different forms, and that neither should be construed to limit the scope of the disclosure. In some example embodiments, well-known processes, well-known device structures, and well-known technologies are not described in detail.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having" are inclusive and therefore specify the presence of stated features, integers, steps, operations, elements, components, and/or groups, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers, and/or sections, these elements, components, regions, layers, and/or sections should not be limited by these terms. These terms may be only used to distinguish one element, component, region, layer or section from another element, component, region, layer, or section. Terms such as "first," "second," and other numerical terms when used herein do not imply a sequence or order unless clearly indicated by the context. Thus, a first element, component, region, layer, or section discussed below could be termed a second element, component, region, layer, or section without departing from the teachings of the example embodiments.

Spatially relative terms, such as "inner," "outer," "beneath," "below," "lower," "above," "upper," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

The present disclosure is directed to a fully virtualized cockpit where the pilot user can physically interact with mock avionics devices and visually see a display that can be integrated by feeding the display and data streams of the mock avionics devices into the pilot's display. Often, the display will be a VR display, such as a head-worn display device. The visual interface for the pilot will also receive user input feeds from the mock cockpit back to the visual interface, such that the system is dynamic to physical interactions between the pilot and the mock avionics devices.

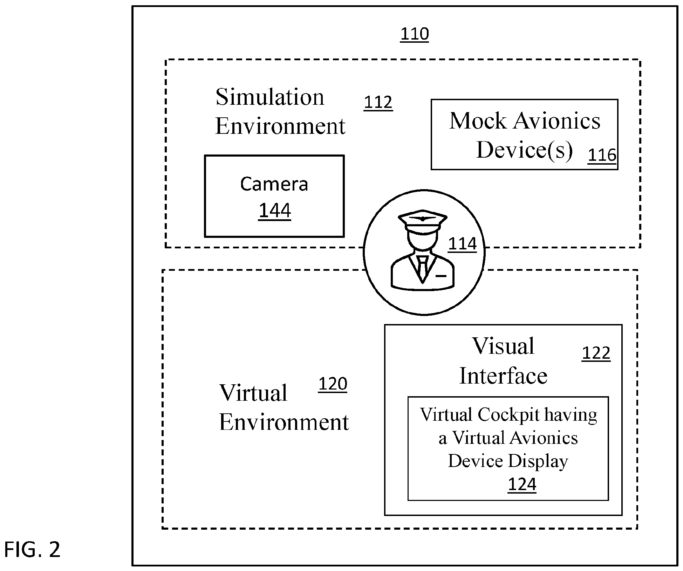

FIG. 2 is a diagrammatic illustration of a flight simulation system 110, in accordance with the present disclosure. As shown in FIG. 2, the flight simulation system 110 includes a physical simulation environment 112 providing flight simulation to a pilot 114 using the simulator. The pilot 114 may be a student pilot or another personnel who is receiving simulator training. At least one mock avionics device 116 and at least one camera 144, both of which are positioned in the physical simulation environment 112, such that the pilot 114 can physically interact with the mock avionics device 116, e.g., by pushing buttons, actuating knobs and handles, or with similar physical interaction. A virtual environment 120 is viewable by the pilot 14 on at least one visual interface 122. The visual interface 122 may include any type of visual display to the pilot 114 and may often be a VR display which is worn by the pilot such that the full field of view of the pilot 114 is encompassed by the visual interface 122. At least one visual interface 122 displays to the pilot a virtualized cockpit having a virtualized avionics device display 124.

While in conventional simulators using VR, the pilot 114 cannot see a physical avionics device 116, and therefore, he or she is limited in interacting with it, the system 110 of FIG. 2 provides a mock avionics device 116 to the VR simulator cockpit that the pilot 114 can physically interact with. This mock avionics device 116 provides the haptics and the sensors, but it does not necessarily have any output capabilities, e.g., no indicator lights, no display, or other output capabilities. Rather, the data output is virtualized within the visual interface 122 such that the pilot 114 can visually identify data within the visual interface 122, and visually interact with the virtualized cockpit displaying a virtualized avionics device display 124 having virtual (but simulated accurate) data. The data may be generated or compiled separately based on the simulation the pilot 114 is conducting.

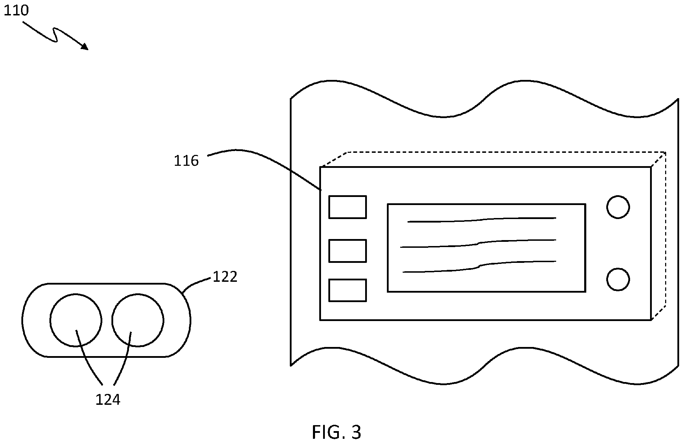

FIG. 3 is a diagrammatic illustration of the flight simulation system of FIG. 2, in accordance with the present disclosure. In particular, FIG. 3 illustrates the physical replica of the front of a mock avionics device 116, in the form of a navigator with functional knobs and touch surface. The functional knobs and touch surfaces are both fed to the controller of the system 110, such that they can be fed to the visual interface 122, but the mock avionics device 116 has no actual display. On left of FIG. 3 is the visual interface 122 in the form of VR goggles worn by pilot showing the virtualized display 124.

It is noted that if the real avionics device comes with a touch-display, the mock avionics device 116 can have just a touch sensitive input. The device itself is virtualized, ideally a software-only virtualization, and the actual output of the virtualized device is injected into virtual reality, so that the pilot can see the device output. Alternatively, a real device, for example, a tablet computer, can be used in the VR cockpit and its outputs, such as display output of some natively installed apps, can be injected into virtualized display 124. In both cases, in order to operate that virtualized display 124 in VR and feel the haptics of the mock device 116, two factors are important: the geometry of the simulator cockpit must match exactly with the geometry of the virtual cockpit, and the hands of the pilot 114 must be tracked with high accuracy and low delay so an avatar hand can be displayed in the simulation. If the pilot 114 touches a button on the mock device 116, the finger of the avatar hand needs to be displayed at exactly that button in the VR cockpit. In a mixed reality (MR) setup, the hands of the pilot 114 may be seen while the display is only virtual.

Thus, while conventional simulators can use original avionics devices or their replicas, the system 110 virtualizes them to render them into the visual interface 122 so they can appear in the virtualized display 124. As such, the pilot physically manipulates the knobs on the mock avionics device 116 which has functional buttons and knobs, but not necessarily a display, and the knobs and display are virtualized in the virtualized display 124. When a tablet computer is used and imported into the virtualized environment, such as an iPad running Foreflight, or a rebuilt Garmin navigator, there can be challenges with alignment methods and geometry calibration which the system 110 may need to account for.

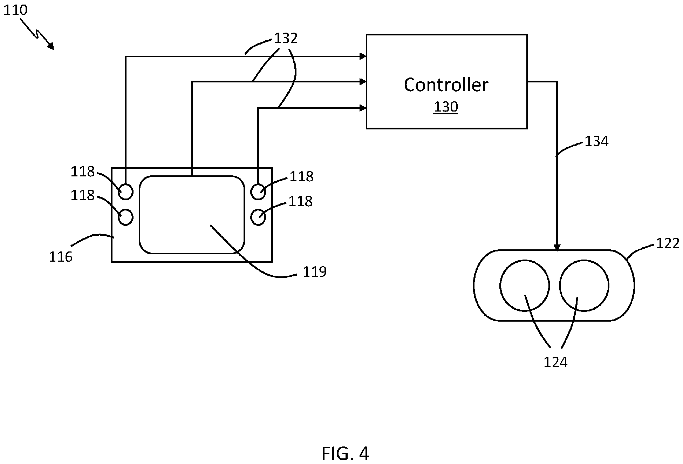

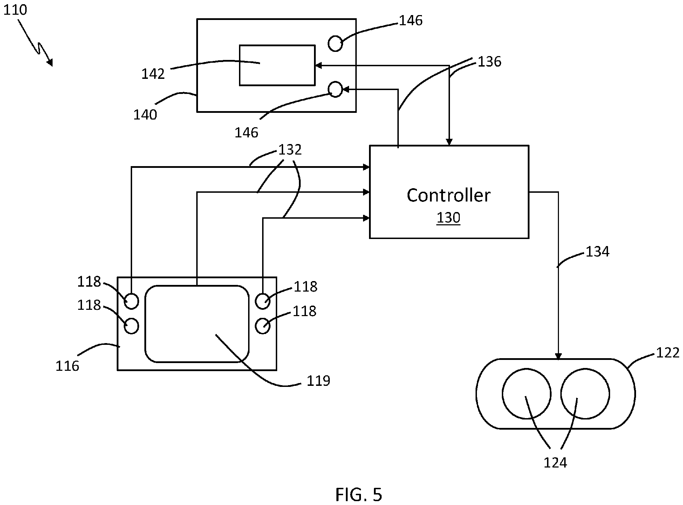

FIG. 4 is a diagrammatic illustration of the flight simulation system 110 of FIG. 2 using software emulation, and FIG. 5 is a diagrammatic illustration of the flight simulation system 110 of FIG. 2 using hardware and/or software interception, in accordance with the present disclosure. With a fully virtualized cockpit, devices with a display can be integrated by feeding their display stream into VR and by feeding user inputs from the mock cockpit back to the device. With regards to display output, the device could be any type of real or virtual device, including a fully virtual device, a real device with a software screen grabber, or a real device with a hardware screen grabber.

As shown in FIGS. 4-5, on the input side, the cockpit of the simulator can have buttons and a touch interface (without a display) accepting user inputs. With the VR and pose tracking solution of the system 110, the pilot is able to interact with that mock cockpit and view avatar images, i.e., hands and fingers performing tasks within VR environment and in a mixed reality environment real hands and fingers can be viewed. To this end, the mock avionics device 116 is in communication with a controller 130. The controller 130 includes a processing unit and is in communication with the visual interface 122. The mock avionics device 116 has a plurality of physical interface features, input selector(s) 118, such as rotary knobs, push buttons, switches, etc., and a touch panel 119 without display capabilities. Data connection lines 132 may connect the various features of the mock avionics device 116 with the controller, and output data connection lines 134 may feed that data, or variations of that data, to the visual interface 122.

Passing the input to the emulated device can be done in various ways. With reference to FIG. 4, a fully virtual device may include emulated device software running on a general purpose computer, producing a video stream for the display output, e.g. integrating Garmin trainer software. Thus, if the emulated devices offers a software interface, the system 110 may be able to accept the direct user input from the software.

Otherwise, the actual hardware may need to be intercepted, such as, for instance, by physically intercepting the display bus, so that the display output can be captured and streamed into VR. As shown in FIG. 5, a real device may include screen grabber software running on the device, providing a video stream of the display output, e.g. a tablet computer, or a real device with hardware screen grabber may use a display communication interface of a real device which could be intercepted by a hardware solution that grabs the frames and produces a video stream. In FIG. 5, the real device 140, such as the real navigator, has various physical interface devices and real input controls 146, such as knobs or buttons, and it uses the software or hardware screen grabber 142. The real input controls 146 may be physically intercepted in order to provide the user inputs using the input selector(s) 118 on the mock avionics device 116. Data collected is communicated in communication lines 136 to the controller 130.

Compared to traditional simulators which don't use VR and typically use real devices, the system 110 can provide a less costly solution to training pilots in simulator environments, since it uses software and mock hardware devices which are less expensive to purchase and maintain than real avionics devices. Additionally, due to the use of software and mock hardware devices, the system 110 can be made in a smaller form factor and with less weight. Because of the use of VR, the system 110 is providing a solution to a problem conventional simulators don't have to deal with. Additionally, the system 110 also offers the benefit of updating the mock devices and software over-the-air by a manufacturer instead of requiring a manual update with a memory card (requiring a qualified person on location).

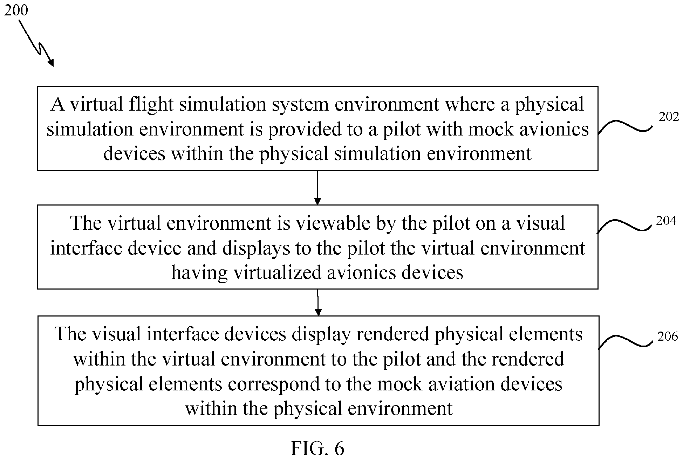

FIG. 6 is a flowchart 200 illustrating a method for providing the flight simulation system of FIG. 2 within a virtualized environment with physical virtualized avionics equipment. It should be noted that any process descriptions or blocks in flow charts should be understood as representing modules, segments, portions of code, or steps that include one or more instructions for implementing specific logical functions in the process, and alternate implementations are included within the scope of the present disclosure in which functions may be executed out of order from that shown or discussed, including substantially concurrently or in reverse order, depending on the functionality involved, as would be understood by those reasonably skilled in the art of the present disclosure.

As shown by block 202 of flowchart 200, a virtual flight simulation system environment where a physical simulation environment is provided to a pilot with mock avionics devices within the physical simulation environment. The virtual environment is viewable by the pilot on a visual interface device and displays to the pilot the virtual environment having virtualized avionics devices (block 204). The visual interface devices display rendered physical elements within the virtual environment to the pilot and the rendered physical elements correspond to the mock aviation devices within the physical environment (block 206). Any number of additional steps, functions, processes, or variants thereof may be included in the method, including any disclosed relative to any other figure of this disclosure. Compared to existing simulator solutions that simulate these complex devices with a pretty low-fidelity approximation of the real device, the virtualized device behaves exactly like the real device. For example, Aerofly is used to simulate the Garmin GTN650 but with a very limited feature set, where user experience differs from the real device in many ways. With the system 110, it is possible to use the original Garmin software and inject it in the virtualized display 124. In this way, it is possible to use the original software of the devices, which do not differ from the original devices. In turn, this means that the system 110 offers the benefit of that the data feed ingested into the VR platform uses the original data generated by the real device, versus compiled data generated by the virtual device. As such, this provides the ability to derive data from the original software or original devices directly, or near directly, so the risk of errors to that data which may occur through reproduction are eliminated or lessened.

An additional benefit over conventional or even mixed reality simulators is that the influence of sunlight can be modeled realistically, i.e. situations where the sun makes the instruments harder to read.

It should be noted that any process descriptions or blocks in flow charts should be understood as representing modules, segments, portions of code, or steps that include one or more instructions for implementing specific logical functions in the process, and alternate implementations are included within the scope of the present disclosure in which functions may be executed out of order from that shown or discussed, including substantially concurrently or in reverse order, depending on the functionality involved, as would be understood by those reasonably skilled in the art of the present disclosure.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure. Various changes and advantages may be made in the above disclosure without departing from the spirit and scope thereof.

### List of References:

- 10: avionics device
- 12: front face
- 14: display panel
- 16: device rear portion
- 110: flight simulation system
- 112: physical simulation environment
- 114: pilot/trainee
- 116: mock avionics device
- 118: input selector(s)
- 119: touch panel
- 120: virtual environment
- 122: visual interface
- 124: virtualized avionics device display
- 130: controller
- 132: data connection lines
- 134: output data connection lines
- 136: communication lines
- 140: real device
- 142: hardware screen grabbe
- 144: camera
- 146: real input controls
- 200: flowchart
- 202, 204, 206: steps

## Claims

1. A flight simulation system comprising:
a physical simulation environment providing flight simulation to a trainee;
at least one mock avionics device positioned within the physical simulation environment; and
a virtual environment viewable by the trainee on at least one visual interface, wherein the at least one visual interface displays to the trainee a virtualized cockpit having at least one virtualized avionics device display.

2. The flight simulation system of claim 1, wherein the at least one visual interface further comprises at least one of: an augmented reality (AR) device, mixed reality (MR) device, a virtual reality (VR) device, spatial computing devices, a tablet, a monitor, a haptic feedback device or a remote collaboration tool.

3. The flight simulation system of claim 1 or claim 2, wherein (a) the at least one mock avionics device is a physical device viewable within the virtualized cockpit, and/or (b) wherein the at least one mock avionics device comprises at least one input selector, wherein the input selector preferably comprises at least one of: knobs, buttons, or input touch surfaces.

4. A system for displaying physical elements in a virtual flight simulation system comprising:
a virtual cockpit viewed through a virtual environment;
at least one camera to capture images or video of one or more physical elements;
a processing unit configured to process the images captured within the physical environment and render digital images or video of the physical elements within the virtual environment; and
at least one display device configured to display the rendered physical elements within the virtual environment.

5. The system of claim 4, further comprising a position tracking module configured to position the camera within the physical environment and render displayable images from the physical environment within the visual interface.

6. The system of claim 4 or claim 5, wherein (a) an adjustment module is configured to adjust the rendering of the physical elements within the virtual environment based on a tracked position of the camera, and/or (b) wherein the camera and at least one sensing device tracks a hand of a trainee during simulation, wherein the at least one sensing device optionally senses the position of the physical elements and provides a video stream to the display device, and/or optionally wherein the virtual environment is interactive and configured to display pilot interaction with the physical elements.

7. The system of any one of claims 4-6, wherein (a) the display device further comprises at least one of an augmented reality (AR) device, mixed reality (MR) device, a virtual reality (VR) device, spatial computing devices, a tablet, a monitor, a haptic feedback device or a remote collaboration tool, and/or (b) wherein a locating device provides physical position details of a trainee displayed virtually, and/or (c) wherein software running on the processing unit is configured to provide a video stream of the captured images, wherein the software optionally is configured to capture images and content and display frame by frame to the trainee in the virtual environment.

8. A method for providing a virtual flight simulation system environment, the method comprising:
providing a physical simulation environment to a trainee, wherein at least one physical mock avionics device is within the physical simulation environment;
providing a virtual environment viewable by the trainee on a visual interface device;
displaying to the trainee the virtual environment having at least one virtualized avionics device; and
configuring the visual interface device to display rendered physical elements within the virtual environment to the trainee, wherein the rendered physical elements correspond to the at least one mock avionics device within the physical simulation environment.

9. The method of claim 8, wherein the at least one visual interface comprises at least one of:
an augmented reality (AR) device, mixed reality (MR) device, a virtual reality (VR) device, spatial computing devices, a tablet, a monitor, a haptic feedback device or a remote collaboration tool.

10. The method of claim 8 or claim 9, wherein the at least one mock avionics device comprises at least one input selector, and wherein the input selector comprises knobs, buttons or input touch surfaces, and further wherein a video stream is displayed, on the visual interface, to the trainee.
